# EUROPÄISCHE PATENTSCHRIFT

(11) **EP 3 771 654 B1**
(45) Veröffentlichungstag und Bekanntmachung des Hinweises auf die Patenterteilung: **15.09.2021**
(21) Anmeldenummer: 20000258.2
(22) Anmeldetag: 17.07.2020
(51) Int. Cl.: B65D 5/20, B65D 5/42, B65D 85/38, B60R 11/00

(54) **SCHUTZVORRICHTUNG FÜR SENSORHALTERUNG, VERWENDUNG EINER SCHUTZVORRICHTUNG, VERFAHREN ZUM SCHUTZ EINER SENSORHALTERUNG UND ANORDNUNG UMFASSEND EINE SCHUTZVORRICHTUNG UND EINE SENSORHALTERUNG**
PROTECTION DEVICE FOR SENSOR SUPPORT, USE OF A PROTECTION DEVICE, METHOD FOR PROTECTING A SENSOR SUPPORT AND SYSTEM COMPRISING A PROTECTION DEVICE AND A SENSOR SUPPORT
DISPOSITIF DE PROTECTION POUR SUPPORT DE CAPTEUR, UTILISATION D'UN DISPOSITIF DE PROTECTION, PROCÉDÉ POUR PROTÉGER UN SUPPORT DE CAPTEUR ET SYSTÈME COMPRENANT UN DISPOSITIF DE PROTECTION ET UN SUPPORT DE CAPTEUR

(30) Priorität: 30.07.2019 LU 101329
(43) Veröffentlichungstag der Anmeldung: 03.02.2021
(73) Patentinhaber: PMA/TOOLS AG, 47877 Willich (DE)
(72) Erfinder: Schrade, Christian, 41352 Korschenbroich (DE)

(56) Entgegenhaltungen:
- CH-A- 244 219
- GB-A- 2 564 637
- US-A- 5 255 784
- US-B2- 7 712 644

## Beschreibung

Die Erfindung betrifft eine Vorrichtung zum Schutz von Sensorhalterungen, inklusive solcher Halterungen für Kameras, zur Montage an Windschutzscheiben von Kraftfahrzeugen beim Transport vor der Montage an die Windschutzscheibe und optional auch während des Transports der mit der Halterung versehenen Windschutzscheibe. Die Erfindung betrifft weiterhin die Verwendung dieser Vorrichtung, ein Verfahren zum Schutz einer Sensorhalterung unter Nutzung dieser Vorrichtung und eine Anordnung zumindest umfassend die erfindungsgemäße Vorrichtung und eine Sensorhalterung.

Halterungen für Sensoren und/oder Kameras zur Befestigung an einer Windschutzscheibe eines Kraftfahrzeugs sind bekannt. Beispielhaft wird hier auf die Veröffentlichungen WO 2010/037500 A2 und EP 1 491 404 A1 verwiesen. Die darin offenbarten Halterungen dienen der Aufnahme von Kameras und/oder Sensoren, welche etwa für die Autoelektronik oder die Navigation genutzt werden können.

Derartige Halterungen bestehen zumeist aus Kunststoff und werden als solche an den Scheibenhersteller geliefert. Dort werden die Halterungen, etwa durch Aufkleben, an der Innenseite von Windschutzscheiben befestigt. Für den Transport der Scheiben zum Hersteller von Kraftfahrzeugen werden diese vertikal aufgestellt und auf Paletten, in Transportgestellen oder in Containern verpackt. Dabei werden die Scheiben aus Platzgründen eng aneinander gestellt. Auf Grund der an den Scheiben montierten Halterungen kann es erstens zu Schäden an den Halterungen selbst kommen, etwa durch Abbrechen von Stegen oder ähnliches, und zweitens zu Schäden an benachbarten Windschutzscheiben durch Reibung der von einer Windschutzscheibe abstehenden Halterung an einer benachbarten Windschutzscheibe. Ein Risiko für die Beschädigung der Halterungen besteht jedoch bereits auch beim Versand der nicht montierten Halterung, da bereits bei diesem Transport von der Halterung abstehende Bestandteile, wie Stege oder Aufnahmen für Sensoren, abbrechen können.

Aus der GB 2564637 A ist eine Schutzvorrichtung für eine an einer Windschutzscheibe montierte Halterung bekannt. Die Anmeldung schlägt dazu eine Vorrichtung umfassend eine Abdeckung aus einem festen Kunststoffmaterial vor. Die Abdeckung umfasst ein offenes Behältnis mit vier Wänden und einem Boden und ist so dimensioniert, dass sie eine Halterung aufnehmen kann. Die Abdeckung kann über einer an der Windschutzscheibe angebrachten Halterung an der Scheibe angebracht werden und dazu kann sie über einen mit einem adhäsiven Material versehenen flachen Rand verfügen.

Die US 5,255,784 A offenbart eine Box zum Transport von Blumensträußen. Dies Box verfügt über vier Seitenwände, an denen vier Deckelabschnitte angeordnet sind. In der Box sind drei Klebestreifen angeordnet, die sich von einem Deckelabschnitt durch die Box bis zum gegenüberliegenden Deckelabschnitt erstrecken. In einer alternativen Ausführungsform ist ein Einsatz offenbart, welcher aus einem Boden, zwei Seitenwänden und zwei daran angeordneten Deckelabschnitten besteht. Weiterhin sind in diesem Einsatz drei Klebestreifen vorhanden, die sich von einem Deckelabschnitt bis zum gegenüberliegenden Deckelabschnitt erstrecken. Dieser Einsatz wird sodann in eine Box mit vier Seitenwänden und vier Deckelabschnitten, ohne Klebestreifen, eingesetzt.

Die dort dargestellte Lehre ermöglicht jedoch keinen Schutz einer Halterung vor der Montage an die Windschutzscheibe. Zudem ergibt sich auf Grund der zwingend vorgesehenen Fertigung der Schutzvorrichtung aus einem Kunststoffmaterial, bevorzugt PET, eine gewisse Umweltproblematik in Bezug auf die wünschenswerte Reduktion der unnötigen Verwendung von Kunststoffen.

Die technische Aufgabe besteht somit in der Bereitstellung einer umweltverträglicheren Vorrichtung für eine Halterung für Sensoren beziehungsweise Kameras die einerseits die Halterung beim Transport und/oder Lagerung vor der Montage an die Windschutzscheibe schützt und andererseits die Halterung zusätzlich während des Transports und/oder der Lagerung der mit der Halterung versehenen Windschutzscheibe schützen kann.

Diese Aufgabe wird durch eine Vorrichtung gemäß dem Anspruch 1 gelöst. Alternativerweise wird diese Aufgabe durch eine Vorrichtung gemäß dem Anspruch 2 gelöst. Weiterhin wird die Aufgabe auch durch eine Verwendung der erfindungsgemäßen Vorrichtung zum Schutz einer Sensorhalterung gemäß dem Anspruch 10, durch ein Verfahren unter Nutzung der erfindungsgemäßen Vorrichtung gemäß dem Anspruch 11 sowie durch eine Anordnung zumindest umfassend die erfindungsgemäße Vorrichtung und eine Sensorhalterung gemäß dem Anspruch 14 gelöst.

Vorteilhafte Ausführungsformen mit zweckmäßigen Weiterbildungen der Erfindung sind Gegenstand der abhängigen Ansprüche.

Die erfindungsgemäße Vorrichtung dient dem Schutz einer Halterung für Sensoren, Kameras oder dergleichen während des Transports unabhängig von der Montagesituation der Halterung.

Der hier gebrauchte Begriff "Sensorhalterung" umfasst Halterungen, die geeignet sind für beispielsweise Sensoren, Kameras, Navigationsgeräte oder weitere Komponenten der Elektrik, Elektronik und/oder Navigation eines Kraftfahrzeuges, wobei diese Halterungen an der Innenseite einer Fahrzeugscheibe festlegbar sind, etwa durch Verkleben.

Die Vorrichtung besteht vorwiegend aus Pappe und umfasst ein Behältnis mit einem polygonalen, bevorzugt viereckigen, besonders bevorzugt rechteckigen und von Bodenkanten begrenzten Boden und mit Seitenwänden, die entlang der jeweiligen Bodenkanten mit dem Boden verbunden sind, wobei diese Verbindungen starr oder beweglich sein können.

An einer ersten Seitenwand ist ein erster Flachkörper angeordnet, welcher relativ zur ersten Seitenwand verschwenkbar ist. Dieser Flachkörper kann zwei Funktionsstellungen einnehmen. In einer ersten Funktionsstellung ist der erste Flachkörper im Wesentlichen parallel zum Boden ausgerichtet und deckt dabei die Öffnung des Behältnisses zumindest partiell ab. Diese erste Funktionsstellung kann auch als geschlossene Funktionsstellung betrachtet werden.

In einer zweiten Funktionsstellung des ersten Flachkörpers ist dieser im Wesentlichen in einer zum Boden des Behältnisses parallelen Ebene ausgerichtet, wobei die Öffnung des Behältnisses freigegeben wird und mithin nicht mehr von dem Flachkörper abgedeckt ist. Diese zweite Funktionsstellung kann auch als offene Funktionsstellung betrachtet werden. Eine erste Seite des Flachkörpers, welche in der ersten Funktionsstellung dem Boden des Behältnisses zugewandt ist, weist einen Fixierbereich auf, welcher zur Befestigung der Vorrichtung an einer Fahrzeugscheibe in der zweiten, offenen Funktionsstellung des Flachkörpers dient. Der Fixierbereich wird durch ein Fixiermittel gebildet, beispielhaft durch Saugnäpfe oder durch ein adhäsives Material, etwa in Form eines doppelseitigen Klebebands. Soweit der Fixierbereich bzw. das Fixiermittel ein adhäsives Material umfasst, kann dieses durch einen nicht-adhäsiven und entfernbaren Abdeckstreifen überdeckt sein.

Selbstverständlich ist die Vorrichtung insgesamt so dimensioniert, dass sie eine Sensorhalterung aufnehmen kann.

Bei der zuvor beschriebenen Vorrichtung kann zusätzlich an einer zweiten, mit einer zweiten Bodenkante des Bodens starr oder beweglich verbundenen Seitenwand, welche bevorzugt der ersten Bodenkante gegenüberliegt, ein zweiter Flachkörper vorgesehen sein, welcher relativ zu der zweiten Seitenwand verschwenkbar ist. Auch dieser Flachkörper kann, wie für den ersten Flachkörper beschrieben, eine erste (geschlossenen) und eine zweite (offene) Funktionsstellung einnehmen. Die Funktionsstellungen des zweiten Flachkörpers können unabhängig von der Funktionsstellung des ersten Flachkörpers eingenommen werden. Der zweite Flachkörper kann auf seiner in der ersten Funktionsstellung dem Boden des Behältnisses zugewandten ersten Seite ebenfalls einen Fixierbereich aufweisen, wie zuvor für den ersten Flachkörper beschrieben. Dabei können die Fixierbereiche der einzelnen Flachkörper verschieden oder bevorzugt gleich oder identisch gestaltet sein.

Weiterhin kann das Behältnis der erfindungsgemäßen Vorrichtung über eine weitere, starr oder beweglich mit einer Bodenkante des Bodens verbundene Seitenwand verfügen, die ihrerseits zwei seitlich angeordnete und mit Aufnahmeschlitzen versehene Laschen aufweist. Soweit die erfindungsgemäße Vorrichtung nur eine erste Seitenwand mit dem ersten Flachkörper aufweist, liegt die Seitenwand mit den mit Aufnahmeschlitzen versehenen Laschen bevorzugt gegenüber dieser ersten Seitenwand. Soweit die erfindungsgemäße Vorrichtung eine erste und zweite Seitenwand mit ersten und zweiten Flachkörpern aufweist, handelt es sich bei der Seitenwand mit den mit Aufnahmeschlitzen versehenen Laschen um eine dritte Seitenwand. Die mit Aufnahmeschlitzen versehenen Laschen befinden sich seitlich an der entsprechenden Seitenwand und sind mit dieser, optional beweglich, verbunden. Die Aufnahmeschlitze können, wenn die erfindungsgemäße Vorrichtung an einer Fahrzeugscheibe befestigt wird, den Rand beziehungsweise die Kante der Fahrzeugscheibe zumindest teilweise aufnehmen und so als zusätzliche Fixierung dienen.

Weiterhin gibt es unterschiedliche Möglichkeiten, das Behältnis der erfindungsgemäßen Vorrichtung zu verschließen, um eine darin enthaltene Sensorhalterung vor der Montage an eine Scheibe zu schützen.

Zunächst besteht die Möglichkeit, eine separate Einlage vorzusehen, die als Deckel für das Behältnis fungiert. Diese Einlage deckt dabei mindestens 50%, bevorzugt jedoch einen Großteil, das heißt mindestens 60%, 70%, 80%, 90% oder besonders bevorzugt 95%, der Fläche des Bodens ab. Idealerweise jedoch ist die Einlage so dimensioniert, dass sie eine in das Behältnis eingelegte Sensorhalterung vollständig abdeckt und dabei im Wesentlichen mit den Seitenwänden des Behältnisses abschließt. Vor der Befestigung der Sensorhalterung an der Fahrzeugscheibe wird diese Einlage entfernt.

Zudem kann an einer oder an mehreren Seitenwänden des Behältnisses mit der oder den Seitenwänden verbundene und zu dieser bzw. diesen relativ verschwenkbare Deckelabschnitte vorgesehen werden.

In einer ersten Variante, ist an einer Seitenwand ein Deckelabschnitt vorgesehen, welcher relativ zu dieser Seitenwand verschwenkbar ist und zwei Funktionsstellungen aufweist. Zum einen kann sich der Deckelabschnitt in einer ersten, geschlossenen, Funktionsstellung befinden, wobei der Deckelabschnitt dann im Wesentlichen parallel zum Boden ausgerichtet ist und die Öffnung des Behältnisses zumindest partiell abdeckt. In einer zweiten, offenen Funktionsstellung ist der Deckelabschnitt in einer im Wesentlichen zum Boden parallelen Ebene ausgerichtet und gibt dabei die Öffnung des Behältnisses frei. Ist lediglich ein Deckelabschnitt vorgesehen, ist dieser derart dimensioniert, dass er zumindest 50%, bevorzugt jedoch einen Großteil, das heißt mindestens 60%, 70%, 80% 90% oder besonders bevorzugt 95%, der Öffnung des Behälters abdecken kann. Letztlich dient der Deckelabschnitt zum Verschließen des Behälters. Ist weiterhin an dieser Seitenwand zusätzlich einer der oben beschriebenen Flachkörper vorhanden, kann optional der Deckelabschnitt im Bereich des Flachkörpers ausgeschnitten sein, so dass Deckelabschnitt und Flachkörper unabhängig voneinander verschwenkbar sind.

In einer zweiten bevorzugten Variante können mehrere, bevorzugt zwei bis vier, Deckelabschnitte vorgesehen werden. Im Falle von zwei Deckelabschnitten, befinden sich diese bevorzugt an sich gegenüberliegenden Seitenwänden. Jeder einzelne Deckelabschnitt ist relativ zur jeweiligen Seitenwand, an welcher er befestigt ist, verschwenkbar und kann jeweils unabhängig eine der zwei zuvor beschriebenen Funktionsstellungen, geschlossen oder offen, einnehmen. Die zwei oder mehrere Deckelabschnitte sind so dimensioniert, dass die Öffnung des Behältnisses zumindest zu 50%, bevorzugt jedoch einen Großteil, das heißt mindestens zu 60%, 70%, 80% oder 90% oder besonders bevorzugt zu 95%, von den Deckelabschnitten abgedeckt ist, wenn sich alle Deckelabschnitte in einer ersten, geschlossenen Funktionsstellung befinden. Soweit an einem oder mehreren Seitenwänden zuvor beschriebene Flachkörper vorgesehen sind, kann der jeweilige Deckelabschnitt im Bereich des Flachkörpers optional derart ausgeschnitten sein, dass Deckelabschnitt und Flachkörper unabhängig voneinander verschwenkbar sind. Optional kann im Verbindungsbereich des oder der Deckelabschnitte, seien es ein oder mehrere Deckelabschnitte, mit der jeweiligen Seitenwand ein Sollbruchbereich, etwa eine Perforation, vorgesehen sein, entlang welcher der jeweilige Deckelabschnitt entfernbar ist.

In einer weiteren Alternative kann bei einer erfindungsgemäßen Vorrichtung auch mindestens einer der Flachkörper derart dimensioniert sein, dass bei der ersten Funktionsstellung aller Flachkörper die Öffnung des Behältnisses zu mindestens 50%, bevorzugt mindestens zu 60%, 70%, 80% oder 90%, besonders bevorzugt im Wesentlichen vollständig abdeckt ist. Hierbei wird auf Deckelabschnitte verzichtet. Vielmehr übernimmt ein Flachkörper und/oder übernehmen alle vorhandenen Flachkörper die zusätzliche Funktion eines Deckels für das Behältnis.

Der Verschluss des Behältnisses kann auch dadurch erfolgen, dass die Öffnung des Behältnisses mit einer Folie zu mindestens 50%, bevorzugt mindestens zu 60%, 70%, 80% oder 90%, besonders bevorzugt im Wesentlichen vollständig, bedeckt wird. Die Folie kann an zwei oder mehreren Seitenwänden, optional entfernbar, befestigt werden. Der oder die Flachkörper und die optional vorhandenen Deckelabschnitte befinden sich dabei in der ersten, geschlossenen Funktionsstellung. Die Folie kann alternativ oder zusätzlich zu den zuvor genannten Möglichkeiten verwendet werden. Eine Folie ist hier definiert als ein sehr dünnes Blatt aus einem beliebigen Material. Es kommen dabei beispielsweise Folien aus Metall, Papier, Pappe oder Kunststoff in Frage.

Die erfindungsgemäße Vorrichtung in der jeweiligen spezifischen Ausführungsform wird als Schutz einer Sensorhalterung verwendet. Dabei dient sie als Schutz der Halterung bei ihrem Transport vor der Montage an eine Fahrzeugscheibe.

Sie kann zusätzlich auch nach erfolgter Montage der Sensorhalterung an eine Fahrzeugscheibe dem Schutz der Halterung beim Transport der mit der Sensorhalterung versehenen Fahrzeugscheibe insbesondere vor dem Einbau der Scheibe in die Karosserie eines Kraftfahrzeuges dienen. Die erfindungsgemäße Vorrichtung kann daher eine Doppelfunktion aufweisen, den Schutz einer Sensorhalterung beim Transport der nicht montierten Sensorhalterung und/oder den Schutz einer an einer Fahrzeugscheibe montierten Sensorhalterung.

Teil der vorliegenden Erfindung ist auch ein Verfahren zum Schutz einer Sensorhalterung, welches unabhängig von der Montagesituation der Sensorhalterung ist. Dieses Verfahren nutzt die zuvor beschriebene erfindungsgemäße Vorrichtung. Zunächst wird die erfindungsgemäße Vorrichtung in einer der zuvor beschriebenen Ausführungsformen bereitgestellt.

Dann wird die zu schützende Sensorhalterung in dem Behältnis der erfindungsgemäßen Vorrichtung angeordnet. Optional kann hier zusätzliches Füll- oder Polstermaterial in der Vorrichtung vorhanden sein oder nach dem Anordnen der Halterung in der Vorrichtung hinzugefügt werden.

Danach wird die Öffnung des Behältnisses entweder durch eine separate Einlage oder durch einen oder mehrere Deckelabschnitte beziehungsweise Flachkörper und/oder durch eine an zumindest zwei Seitenwänden, optional entfernbar, befestigte Folie zu mindestens 50 Prozent, bevorzugt zu einem Großteil, das heißt zu mindestens 60%, 70%, 80% oder 90%, besonders bevorzugt im Wesentlichen vollständig, bedeckt beziehungsweise verschlossen, wobei sich alle Flachkörper und/oder Deckelabschnitte in der ersten, geschlossenen Funktionsstellung befinden.

Nun erfolgt der Transport der Sensorhalterung, geschützt durch die erfindungsgemäße Vorrichtung, an den Ort der Montage an eine Fahrzeugscheibe oder alternativ die Lagerung der Sensorhalterung in der Vorrichtung.

Das erfindungsgemäße Verfahren kann durch die nachfolgenden Verfahrensschritte fortgebildet werden.

Die Sensorhalterung wird aus der erfindungsgemäßen Vorrichtung entnommen und an einer Fahrzeugscheibe festgelegt, beispielsweise durch Verkleben.

Nun wird die Vorrichtung derart über der an der Fahrzeugscheibe festgelegten Sensorhalterung angeordnet, dass der Boden des Behältnisses eine der Fahrzeugscheibe abgewandten Seite der Sensorhalterung abdeckt. Weiterhin befinden sich der oder die Flachkörper jetzt in der zweiten, offenen Funktionsstellung. Dabei ist die erste mit dem Fixierbereich versehene Seite eines jeden Flachkörpers zur Fahrzeugscheibe gerichtet. Ein optional vorhandener nicht-adhäsive Abdeckstreifen wird jetzt von dem optional vorhandenen adhäsiven Material entfernt. Alle Flachkörper werden nun an der Fahrzeugscheibe fixiert, beispielsweise durch das Verbinden des adhäsiven Materials mit der Fahrzeugscheibe, etwa durch Verkleben. Soweit eine der Seitenwände mit Aufnahmeschlitzen versehene Laschen aufweist, kann die Vorrichtung durch Aufnahme von zumindest einem Teil des Randes der Fahrzeugscheibe in den Aufnahmeschlitzen zusätzlich lösbar befestigt werden.

Der jeweilige Deckelabschnitt kann optional vor oder nach dem Anordnen der Vorrichtung über der an der Fahrzeugscheibe festgelegten Sensorhalterung entfernt werden, etwa durch Abtrennen entlang eines Sollbruchbereichs wie einer Perforationslinie.

Nun kann der Transport und/oder die Lagerung der mit der Sensorhalterung und der erfindungsgemäßen Vorrichtung versehenen Fahrzeugscheibe erfolgen. Vor oder nach dem Einbau der Fahrzeugscheibe in die Karosserie wird die Vorrichtung von der Fahrzeugscheibe gelöst.

Mittels des zuvor beschriebenen Verfahrens wird eine Sensorhalterung beim Transport vor ihrer Montage und optional auch beim Transport der mit der Sensorhalterung versehenen Fahrzeugscheibe zum Einbauort der Fahrzeugscheibe geschützt. Weiterhin ermöglicht dieses Verfahren den Schutz benachbarter Scheiben vor Beschädigungen durch Sensorhalterungen, wenn mehrere vertikal stehende Fahrzeugscheiben transportiert werden. Die Vorrichtung wirkt dann als Abstandhalter zwischen den Scheiben und schützt sowohl die Sensorhalterung als auch die benachbarten Scheiben vor gegenseitiger Beschädigung.

Ebenso im Rahmen der Erfindung ist eine Anordnung umfassend eine erfindungsgemäße Vorrichtung, eine Sensorhalterung und optional eine Fahrzeugscheibe.

Weitere Merkmale und Vorteile der Erfindung sind Gegenstand der nachfolgenden Beschreibung und der zeichnerischen Darstellung bevorzugter, jedoch nicht begrenzender Ausführungsbeispiele.

Dabei zeigt die
- Figur 1: eine Vorrichtung mit zwei Flachkörpern und zwei Deckelabschnitten, welche sich jeweils in der ersten (geschlossenen) Funktionsstellung befinden,
- Figur 2: eine Vorrichtung gemäß Figur 1, wobei die Flachkörper und die Deckelabschnitte sich jeweils in der zweiten (offenen) Funktionsstellung befinden,
- Figur 3: eine Vorrichtung gemäß Figur 2 mit Aufnahmeschlitzen,
- Figur 4: eine Vorrichtung gemäß Figur 2 mit einer darin angeordneten Sensorhalterung (gestrichelt),
- Figur 5: eine Vorrichtung gemäß Figur 2, die an einer mit einer Sensorhalterung (gestrichelt) versehenen Fahrzeugscheibe (gestrichelt) angeordnet ist,
- Figur 6: eine Vorrichtung gemäß Figur 3, die an einer mit einer Sensorhalterung (gestrichelt) versehenen Fahrzeugscheibe (gestrichelt) angeordnet ist; der Ausschnitt A zeigt eine 1:2 Vergrößerung des Bereiches der Aufnahmeschlitze, welche den Rand der Fahrzeugscheibe (gestrichelt) teilweise aufnehmen.

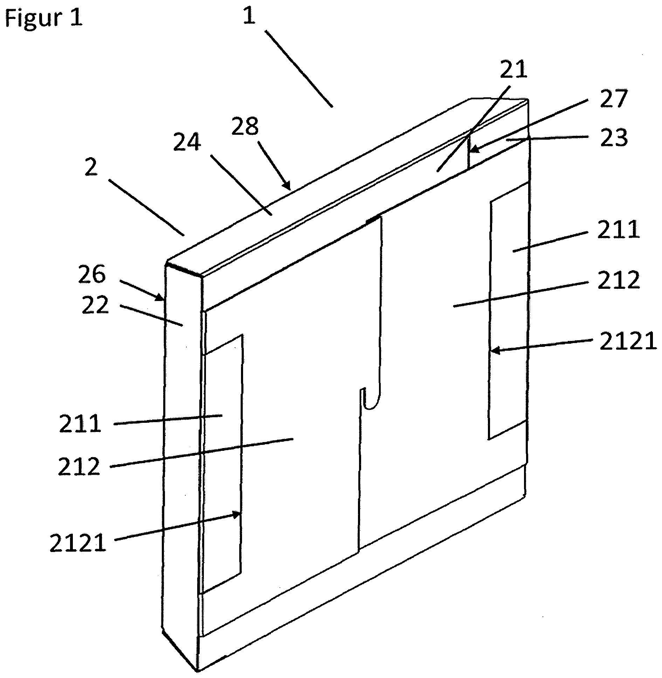

Die in Figur 1 gezeigte erfindungsgemäße Vorrichtung (1) zum Schutz einer Sensorhalterung (3) verfügt über zwei Flachkörper (211) und zwei Deckelabschnitte (212), welche sich jeweils in der ersten (geschlossenen) Funktionsstellung befinden. Die Vorrichtung (1) umfasst ein Behältnis (2) mit einem hier viereckigen Boden (21) und einer ersten Seitenwand (22), die mit einer ersten Bodenkante (26) des Bodens (21) beweglich verbunden ist. Gleichfalls sind auch eine zweite Seitenwand (23), eine dritte Seitenwand (24) und eine vierte Seitenwand (25) vorhanden, die ihrerseits jeweils mit der zweiten Bodenkante (27), der dritten Bodenkante (28) oder der vierten Bodenkante (29) beweglich verbunden sind. Weiterhin sind zwei Flachkörper (211) vorhanden, welche jeweils unabhängig voneinander relativ zu der ersten beziehungswiese zweiten Seitenwand (22, 23) verschwenkbar an der ersten oder zweiten Seitenwand (22, 23) angeordnet sind.

Weiterhin verfügt die Vorrichtung (1) über zwei Deckelabschnitte (212), die jeweils an der ersten und zweiten Seitenwand (22, 23) angeordnet sind und unabhängig voneinander relativ zu der jeweiligen Seitenwand (22, 23) beweglich sind. Weiterhin weisen die Deckelabschnitte (212) Ausschnitte für die Flachkörper (2121) auf, wodurch diese unabhängig von den Flachkörpern (211) beweglich sind.

Sowohl die Flachkörper (211) als auch die Deckelabschnitte (212) befinden sich in der ersten Funktionsstellung, wobei die Deckelabschnitte (212) die Öffnung der Vorrichtung (1) zu mindestens 50% abdecken.

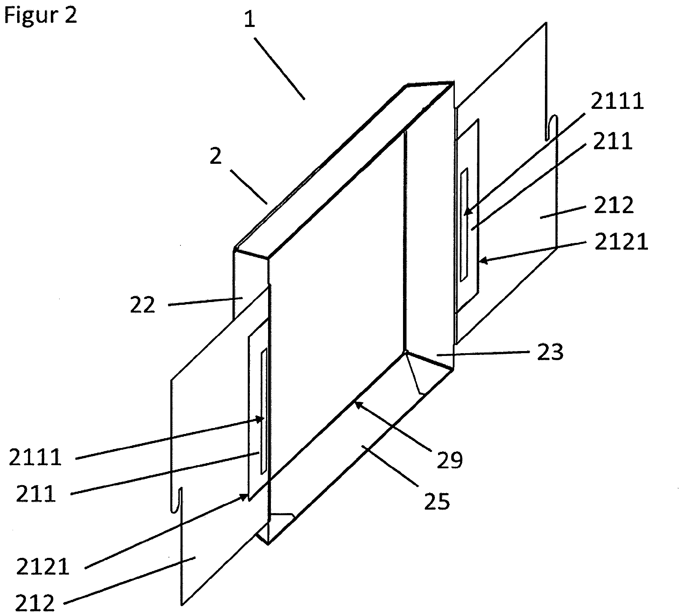

Die Figur 2 zeigt dieselbe erfindungsgemäße Vorrichtung entsprechend Figur 1, wobei sich hier alle Flachkörper (211) und Deckelabschnitte (212) jeweils in der zweiten Funktionsstellung befinden. Die Merkmale der Vorrichtung entsprechen denen der Figur 1. In dieser Funktionsstellung ist auf den ersten Seiten der Flachkörper (211) jeweils der Fixierbereich (2111) in Form eines als Doppelklebeband ausgebildeten adhäsiven Materials sichtbar.

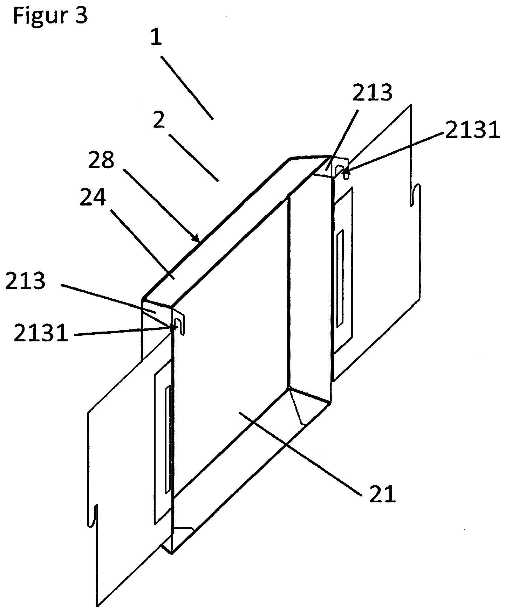

Die Figur 3 zeigt eine erfindungsgemäße Vorrichtung, die zusätzlich zu den Merkmalen der Figuren 1 und 2 zwei seitlich an der dritten Seitenwand (24) jeweils mit einem Aufnahmeschlitz (2131) versehene Laschen (213) aufweist.

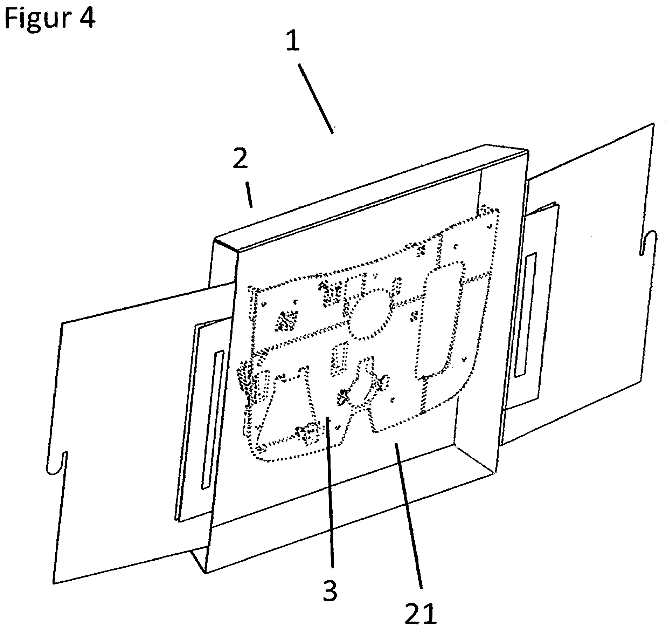

Die in der Figur 4 gezeigte Vorrichtung entspricht der in der Figur 2 gezeigten. Weiterhin ist hier eine gestrichelt dargestellte Sensorhalterung (3) gezeigt, welche in dem Behältnis (2) der Vorrichtung (1) angeordnet ist. Dabei ist die Vorrichtung (1) derart dimensioniert, dass sie eine Sensorhalterung (3) aufnehmen kann.

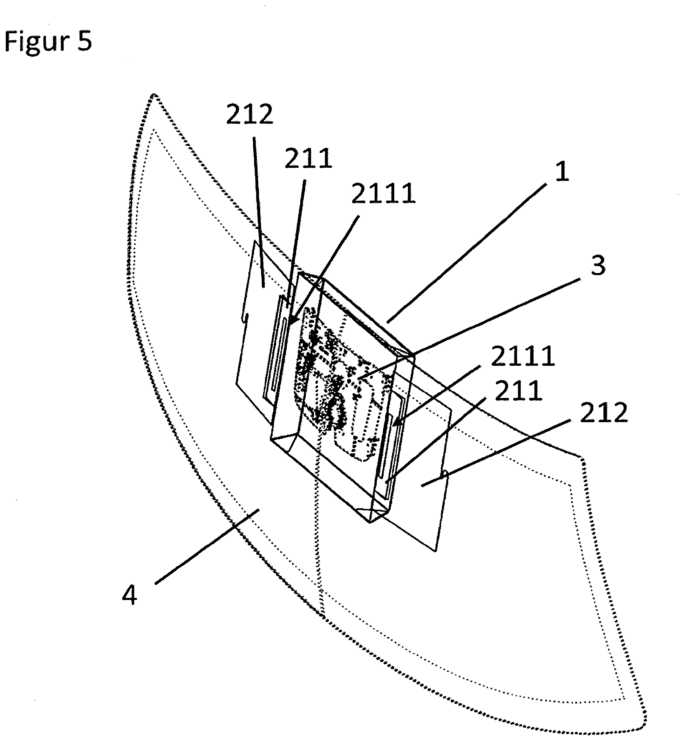

Die Figur 5 zeigt eine an einer gestrichelt dargestellten Windschutzscheibe (4) angeordnete Sensorhalterung (ebenfalls gestrichelt) (3), über der das Behältnis (2) der Vorrichtung (1) in der zweiten, geöffneten Funktionsstellung mittels des adhäsiven Materials des Fixierbereichs (2111) an der Windschutzscheibe (4) befestigt ist. Die Sensorhalterung (3) ist zwischen der Scheibe (4) und der Vorrichtung (1) aufgenommen und damit während der Lagerung und des Transports der Scheibe (4) geschützt.

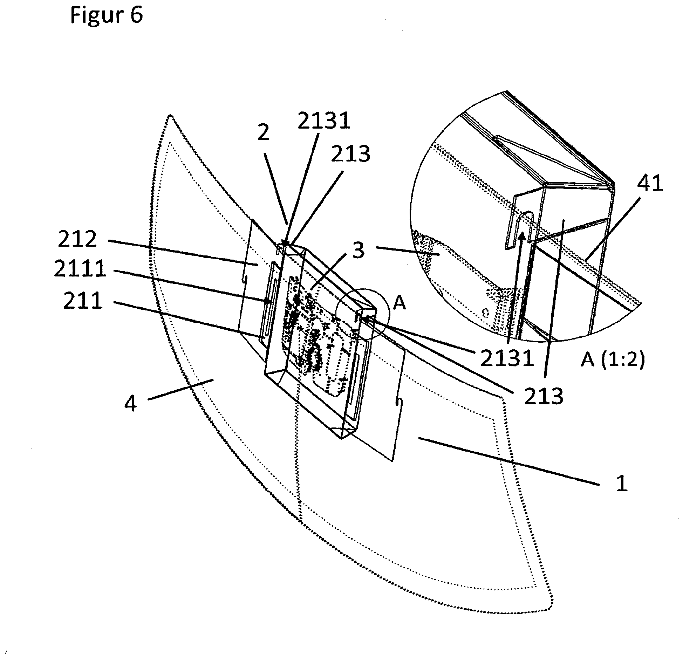

Die Figur 6 zeigt eine an einer gestrichelt dargestellten Windschutzscheibe (4) angeordnete Sensorhalterung (ebenfalls gestrichelt) (3) und die erfindungsgemäße Vorrichtung (1) entsprechend Figur 3. Das Behältnis (2) der Vorrichtung ist in der zweiten (geöffneten) Funktionsstellung der Flachkörper (211) und der Deckelabschnitte (212) mittels eines doppelseitigen Klebebands an der Windschutzscheibe (4) befestigt. Weiterhin nehmen die Aufnahmeschlitze (2131) der Laschen (213) einen Teil des Randes der Windschutzscheibe (41) auf. In der 1:2 Vergrößerung im Ausschnitt A ist gezeigt, wie die Aufnahmeschlitze (2131) den gestrichelt dargestellten Rand der Windschutzscheibe (41) aufnehmen.

In den Figuren wurden folgende Bezugszeichen verwendet:
- 1: Vorrichtung
- 2: Behältnis
- 3: Sensorhalterung
- 4: Windschutzscheibe
- 21: Boden
- 22: erste Seitenwand
- 23: zweite Seitenwand
- 24: dritte Seitenwand
- 25: vierte Seitenwand
- 26: erste Bodenkante
- 27: zweite Bodenkante
- 28: dritte Bodenkante
- 29: vierte Bodenkante
- 41: Rand der Windschutzscheibe
- 211: Flachkörper
- 2111: Fixierbereich
- 212: Deckelabschnitt
- 2121: Ausschnitt des Deckelabschnitts
- 213: Lasche
- 2131: Aufnahmeschlitz

## Patentansprüche

1. Vorrichtung (1) zum Schutz einer Sensorhalterung (3) während des Transports, umfassend ein Behältnis (2) mit einem polygonalen, bevorzugt viereckigen Boden (21) und mit Seitenwänden (22, 23, 24, 25), die entlang der jeweiligen Bodenkanten (26, 27, 28, 29) mit dem Boden (21) verbunden sind, wobei an einer ersten Seitenwand (22) ein relativ zu der ersten Seitenwand (22) verschwenkbarer erster Flachkörper (211) angeordnet ist, welcher in einer ersten Funktionsstellung im Wesentlichen parallel zu dem Boden (21) ausgerichtet ist und dabei eine Öffnung des Behältnisses (2) zumindest partiell abdeckt, und welcher in einer zweiten Funktionsstellung im Wesentlichen in einer zum Boden (21) parallelen Ebene ausgerichtet ist und dabei die Öffnung des Behältnisses (2) freigibt, wobei auf einer ersten Seite des ersten Flachkörpers (211), welche in der ersten Funktionsstellung dem Boden (21) des Behältnisses (2) zugewandt ist, ein Fixierbereich (2111), der durch ein Fixiermittel, insbesondere durch Saugnäpfe oder durch ein adhäsives Material, gebildet wird, vorgesehen ist, mittels welchem die Vorrichtung (1) in der zweiten Funktionsstellung des ersten Flachkörpers (211) an einer Fahrzeugscheibe (4) befestigt werden kann, und wobei die Vorrichtung (1) vorwiegend aus Pappe besteht, **dadurch gekennzeichnet, dass** ausschließlich ein erster Flachkörper (211) vorhanden ist.

2. Vorrichtung (1) zum Schutz einer Sensorhalterung (3) während des Transports, umfassend ein Behältnis (2) mit einem polygonalen, bevorzugt viereckigen Boden (21) und mit Seitenwänden (22, 23, 24, 25), die entlang der jeweiligen Bodenkanten (26, 27, 28, 29) mit dem Boden (21) verbunden sind, wobei an einer ersten Seitenwand (22) ein relativ zu der ersten Seitenwand (22) verschwenkbarer erster Flachkörper (211) angeordnet ist, welcher in einer ersten Funktionsstellung im Wesentlichen parallel zu dem Boden (21) ausgerichtet ist und dabei eine Öffnung des Behältnisses (2) zumindest partiell abdeckt, und welcher in einer zweiten Funktionsstellung im Wesentlichen in einer zum Boden (21) parallelen Ebene ausgerichtet ist und dabei die Öffnung des Behältnisses (2) freigibt, wobei auf einer ersten Seite des ersten Flachkörpers (211), welche in der ersten Funktionsstellung dem Boden (21) des Behältnisses (2) zugewandt ist, ein Fixierbereich (2111), der durch ein Fixiermittel, insbesondere durch Saugnäpfe oder durch ein adhäsives Material, gebildet wird, vorgesehen ist, mittels welchem die Vorrichtung (1) in der zweiten Funktionsstellung des ersten Flachkörpers (211) an einer Fahrzeugscheibe (4) befestigt werden kann, und wobei die Vorrichtung (1) vorwiegend aus Pappe besteht, **dadurch gekennzeichnet, dass** ausschließlich ein erster Flachkörper (211) und ein zweiter Flachkörper (211) vorgesehen sind, wobei der zweite Flachkörper (211) an einer zweiten Seitenwand (23), die bevorzugt der ersten Seitenwand (22) gegenüberliegt, angeordnet ist und relativ zu der zweiten Seitenwand (23) verschwenkbar ist, wobei der zweite Flachkörper (211) in einer ersten Funktionsstellung im Wesentlichen parallel zum Boden (21) ausgerichtet ist und dabei die Öffnung des Behältnisses (2) zumindest partiell abdeckt, und in einer zweiten Funktionsstellung im Wesentlichen in einer zum Boden (21) parallelen Ebene ausgerichtet ist und dabei die Öffnung des Behältnisses (2) freigibt, wobei auf einer ersten Seite des zweiten Flachkörpers (211), welche in der ersten Funktionsstellung dem Boden (21) des Behältnisses (2) zugewandt ist, ein Fixierbereich (2111), der durch ein Fixiermittel, insbesondere durch Saugnäpfe oder durch ein adhäsives Material, gebildet wird, vorgesehen ist, mittels welchem die Vorrichtung in der zweiten Funktionsstellung des zweiten Flachkörpers (211) an der Fahrzeugscheibe (4) befestigt werden kann.

3. Vorrichtung nach Anspruch 1, **dadurch gekennzeichnet, dass** eine zweite Seitenwand (23), welche bevorzugt der ersten Seitenwand (22) gegenüberliegt, über zwei seitlich an dieser Seitenwand (23) angeordnete und jeweils mit einem Aufnahmeschlitz (2131) versehene Laschen (213) verfügt, wobei die Aufnahmeschlitze (2131) geeignet sind, einen Randbereich der Fahrzeugscheibe (41) zumindest teilweise aufzunehmen.

4. Vorrichtung nach Anspruch 2, **dadurch gekennzeichnet, dass** eine dritte Seitenwand (24) über zwei seitlich an dieser Seitenwand (24) angeordnete und jeweils mit einem Aufnahmeschlitz (2131) versehene Laschen (213) verfügt, wobei die Aufnahmeschlitze (2131) geeignet sind, einen Randbereich der Fahrzeugscheibe (41) zumindest teilweise aufzunehmen.

5. Vorrichtung nach einem der Ansprüche 1 bis 4, **dadurch gekennzeichnet, dass** die Vorrichtung (1) über eine separate Einlage verfügt, welche als Deckel des Behältnisses (2) geeignet ist und so dimensioniert ist, dass der Boden (21) des Behältnisses (2) durch die separate Einlage zumindest zu 50% abdeckbar ist.

6. Vorrichtung nach einem der Ansprüche 1 bis 4, **dadurch gekennzeichnet, dass** an mindestens einer Seitenwand (22, 23, 24, 25) zusätzlich mindestens ein Deckelabschnitt (212) vorhanden ist, der relativ zu der zugeordneten Seitenwand (22, 23, 24, 25) verschwenkbar ist und in einer ersten Funktionsstellung im Wesentlichen parallel zum Boden (21) ausgerichtet ist und die Öffnung des Behältnisses (2) zumindest partiell abdeckt und in einer zweiten Funktionsstellung in einer im Wesentlichen zum Boden (21) parallelen Ebene ausgerichtet ist und dabei die Öffnung des Behältnisses (2) freigibt, wobei der mindestens eine Deckelabschnitt (212) derart dimensioniert ist, dass in der ersten Funktionsstellung aller Deckelabschnitte (212) die Öffnung des Behältnisses (2) zu mindestens 50% abgedeckt ist, und wobei in dem mindestens einen Deckelabschnitt (212) ein Ausschnitt (2121) für den an der zugeordneten Seitenwand (22, 23, 24, 25) angeordneten Flachkörper (211) vorgesehen ist, wobei der Ausschnitt (2121) eine unabhängige Verschwenkbarkeit des Flachkörpers (211) und des Deckelabschnitts (212) ermöglicht.

7. Vorrichtung nach Anspruch 6, **dadurch gekennzeichnet, dass** sich in einem Verbindungsbereich zwischen dem mindestens einen Deckelabschnitt (212) und der zugeordneten Seitenwand (22, 23, 24, 25) ein Sollbruchbereich befindet und dass der Deckelabschnitt (212) von der Seitenwand (22, 23, 24, 25) entlang des Sollbruchbereichs entfern bar ist.

8. Vorrichtung nach einem der Ansprüche 1 bis 4, **dadurch gekennzeichnet, dass** mindestens ein Flachköper (211) derart dimensioniert ist, dass bei der ersten Funktionsstellung aller Flachkörper (211) die Öffnung des Behältnisses (2) zu mindestens 50% abdeckt ist.

9. Vorrichtung nach einem der Ansprüche 1 bis 8, **dadurch gekennzeichnet, dass** sich alle Flachkörper (211) und alle optional vorhandenen Deckelabschnitte (212) in ihrer ersten Funktionsstellung befinden, wobei die Öffnung des Behältnisses (2) durch eine an zumindest zwei Seitenwänden (22, 23, 24, 25) befestigte Folie zumindest zu 50%, besonders bevorzugt im Wesentlichen vollständig, verschlossen ist.

10. Verwendung
- einer Vorrichtung (1) umfassend ein Behältnis (2) mit einem polygonalen, bevorzugt viereckigen Boden (21) und mit Seitenwänden (22, 23, 24, 25), die entlang der jeweiligen Bodenkanten (26, 27, 28, 29) mit dem Boden (21) verbunden sind, wobei an einer ersten Seitenwand (22) ein relativ zu der ersten Seitenwand (22) verschwenkbarer erster Flachkörper (211) angeordnet ist, welcher in einer ersten Funktionsstellung im Wesentlichen parallel zu dem Boden (21) ausgerichtet ist und dabei eine Öffnung des Behältnisses (2) zumindest partiell abdeckt, und welcher in einer zweiten Funktionsstellung im Wesentlichen in einer zum Boden (21) parallelen Ebene ausgerichtet ist und dabei die Öffnung des Behältnisses (2) freigibt, wobei auf einer ersten Seite des ersten Flachkörpers (211), welche in der ersten Funktionsstellung dem Boden (21) des Behältnisses (2) zugewandt ist, ein Fixierbereich (2111), der durch ein Fixiermittel, insbesondere durch Saugnäpfe oder durch ein adhäsives Material, gebildet wird, vorgesehen ist, mittels welchem die Vorrichtung (1) in der zweiten Funktionsstellung des ersten Flachkörpers (211) an einer Fahrzeugscheibe (4) befestigt werden kann und wobei die Vorrichtung (1) vorwiegend aus Pappe besteht, oder
- einer Vorrichtung (1) nach einem der Ansprüche 1 bis 9 zum Schutz einer Sensorhalterung (3) vor einer Montage an eine Fahrzeugscheibe (4) und/oder zum Schutz einer an einer Fahrzeugscheibe (4) festgelegten Sensorhalterung (3).

11. Verfahren zum Schutz einer Sensorhalterung (3), umfassend
a) Bereitstellen einer Vorrichtung (1) umfassend ein Behältnis (2) mit einem polygonalen, bevorzugt viereckigen Boden (21) und mit Seitenwänden (22, 23, 24, 25), die entlang der jeweiligen Bodenkanten (26, 27, 28, 29) mit dem Boden (21) verbunden sind, wobei an einer ersten Seitenwand (22) ein relativ zu der ersten Seitenwand (22) verschwenkbarer erster Flachkörper (211) angeordnet ist, welcher in einer ersten Funktionsstellung im Wesentlichen parallel zu dem Boden (21) ausgerichtet ist und dabei eine Öffnung des Behältnisses (2) zumindest partiell abdeckt, und welcher in einer zweiten Funktionsstellung im Wesentlichen in einer zum Boden (21) parallelen Ebene ausgerichtet ist und dabei die Öffnung des Behältnisses (2) freigibt, wobei auf einer ersten Seite des ersten Flachkörpers (211), welche in der ersten Funktionsstellung dem Boden (21) des Behältnisses (2) zugewandt ist, ein Fixierbereich (2111), der durch ein Fixiermittel, insbesondere durch Saugnäpfe oder durch ein adhäsives Material, gebildet wird, vorgesehen ist, mittels welchem die Vorrichtung (1) in der zweiten Funktionsstellung des ersten Flachkörpers (211) an einer Fahrzeugscheibe (4) befestigt werden kann, und wobei die Vorrichtung (1) vorwiegend aus Pappe besteht, oder einer Vorrichtung (1) nach einem der Ansprüche 1 bis 9,
b) Anordnen einer Sensorhalterung (3) in dem Behältnis (2) der Vorrichtung (1),
c) zumindest teilweises Abdecken der Öffnung des Behältnisses (2) durch eine separate Einlage und/oder durch einen oder mehrere Flachkörper (211), welche sich in ihrer ersten Funktionsstellung befinden, und/oder durch einen oder mehrere Deckelabschnitte (212), welche sich in ihrer ersten Funktionsstellung befinden, und/oder durch eine Folie, welche an zumindest zwei Seitenwänden (22, 23, 24, 25) befestigt ist.

12. Verfahren nach Anspruch 11, zusätzlich umfassend
d) Entnehmen der Sensorhalterung (3) aus dem Behältnis (2) der Vorrichtung (1),
e) Festlegen der Sensorhalterung (3) an einer Fahrzeugscheibe (4),
f) Anordnen der Vorrichtung (1) an der Fahrzeugscheibe (4) derart, dass der Boden (21) des Behältnisses (2) eine der Fahrzeugscheibe (4) abgewandte Seite der Sensorhalterung (3) abdeckt, wobei alle Flachkörper (211) sich in ihrer zweiten Funktionsstellung befinden und wobei mindestens ein Flachkörper (211) über seinen Fixierbereich (2111) mit der Scheibe (4) verbunden wird, insbesondere wobei die Vorrichtung (1) durch Aufnahme zumindest eines Teils eines Randes der Fahrzeugscheibe (41) in Aufnahmeschlitze (2131) der an einer Seitenwand (22, 23, 24, 25) angeordneten Laschen (213) zusätzlich an der Fahrzeugscheibe (4) lösbar befestigt wird.

13. Verfahren nach Anspruch 12, zusätzlich umfassend das Entfernen mindestens eines Deckelabschnitts (212) vor oder nach dem Anordnen der Vorrichtung (1) an der Fahrzeugscheibe (4).

14. Anordnung umfassend eine Vorrichtung (1) umfassend ein Behältnis (2) mit einem polygonalen, bevorzugt viereckigen Boden (21) und mit Seitenwänden (22, 23, 24, 25), die entlang der jeweiligen Bodenkanten (26, 27, 28, 29) mit dem Boden (21) verbunden sind, wobei an einer ersten Seitenwand (22) ein relativ zu der ersten Seitenwand (22) verschwenkbarer erster Flachkörper (211) angeordnet ist, welcher in einer ersten Funktionsstellung im Wesentlichen parallel zu dem Boden (21) ausgerichtet ist und dabei eine Öffnung des Behältnisses (2) zumindest partiell abdeckt, und welcher in einer zweiten Funktionsstellung im Wesentlichen in einer zum Boden (21) parallelen Ebene ausgerichtet ist und dabei die Öffnung des Behältnisses (2) freigibt, wobei auf einer ersten Seite des ersten Flachkörpers (211), welche in der ersten Funktionsstellung dem Boden (21) des Behältnisses (2) zugewandt ist, ein Fixierbereich (2111), der durch ein Fixiermittel, insbesondere durch Saugnäpfe oder durch ein adhäsives Material, gebildet wird, vorgesehen ist, mittels welchem die Vorrichtung (1) in der zweiten Funktionsstellung des ersten Flachkörpers (211) an einer Fahrzeugscheibe (4) befestigt werden kann, und wobei die Vorrichtung (1) vorwiegend aus Pappe besteht oder eine Vorrichtung (1) nach einem der Ansprüche 1 bis 9 und eine Sensorhalterung (3),

15. Anordnung nach Anspruch 14, zusätzlich umfassend eine Fahrzeugscheibe (4).

## Claims

1. Device (1) for protecting a sensor holder (3) during transport, comprising a container (2) with a polygonal, preferably quadrangular base (21) and with side walls (22, 23, 24, 25) which are connected to the base (21) along the respective base edges (26, 27, 28, 29), wherein a first flat body (211) is arranged on a first side wall (22), which flat body (211) is pivotable relative to the first side wall (22) and, in a first functional position, is aligned substantially parallel to the base (21), thereby at least partially covering an opening of the container (2), and which first flat body (211), in a second functional position, is aligned essentially in a plane parallel to the base (21), thereby exposing the opening of the container (2), wherein, on a first side of the first flat body (211), which, in the first functional position, faces the base (21) of the container (2), there is provided a fixing region (2111) formed by a fixing means, in particular by suction cups or by an adhesive material, by means of which fixing region (2111) the device (1) can be fastened to a vehicle pane (4) in the second functional position of the first flat body (211), and wherein the device (1) is composed predominantly of cardboard, **characterized in that** only one first flat body (211) is provided.

2. Device (1) for protecting a sensor holder (3) during transport, comprising a container (2) with a polygonal, preferably quadrangular base (21) and with side walls (22, 23, 24, 25) which are connected to the base (21) along the respective base edges (26, 27, 28, 29), wherein a first flat body (211) is arranged on a first side wall (22), which flat body (211) is pivotable relative to the first side wall (22) and, in a first functional position, is aligned substantially parallel to the base (21), thereby at least partially covering an opening of the container (2), and which first flat body (211), in a second functional position, is aligned substantially in a plane parallel to the base (21), thereby exposing the opening of the container (2), wherein, on a first side of the first flat body (211), which, in the first functional position, faces the base (21) of the container (2), there is provided a fixing region (2111) formed by a fixing means, in particular by suction cups or by an adhesive material, by means of which fixing region (2111) the device (1) can be fastened to a vehicle pane (4) in the second functional position of the first flat body (211), and wherein the device (1) is predominantly made of cardboard, **characterized in that** only one first flat body (211) and one second flat body (211) are provided, wherein the second flat body (211) is arranged on a second side wall (23), which is preferably opposite the first side wall (22), and is pivotable relative to the second side wall (23), wherein the second flat body (211), in a first functional position, is aligned substantially parallel to the base (21), thereby at least partially covering the opening of the container (2), and, in a second functional position, is aligned substantially in a plane parallel to the base (21), thereby exposing the opening of the container (2), wherein on a first side of the second flat body (211), which, in the first functional position, faces the base (21) of the container (2), there is provided a fixing region (2111) formed by a fixing means, in particular by suction cups or by an adhesive material, by means of which fixing region (2111) the device can be fastened to the vehicle pane (4) in the second functional position of the second flat body (211).

3. Device according to claim 1, **characterized in that** a second side wall (23), which is preferably opposite the first side wall (22), is fitted with two flaps (213) which are arranged laterally on this side wall (23) and which are each provided with a receiving slot (2131), the receiving slots (2131) being suitable for at least partially receiving an edge region of the vehicle pane (41).

4. Device according to claim 2, **characterized in that** a third side wall (24) has two flaps (213) which are arranged laterally on this side wall (24) and which are each provided with a receiving slot (2131), the receiving slots (2131) being suitable for at least partially receiving an edge region of the vehicle pane (41).

5. Device according to any one of claims 1 to 4, **characterized in that** the device (1) has a separate insert which is suitable as a lid of the container (2) and which is dimensioned such that the base (21) of the container (2) can be covered to at least 50% by the separate insert.

6. Device according to any one of claims 1 to 4, **characterized in that** on at least one side wall (22, 23, 24, 25) there is additionally provided at least one lid section (212) which can be pivoted relative to the associated side wall (22, 23, 24, 25) and which, in a first functional position, is aligned essentially parallel to the base (21), thereby at least partially covering the opening of the container (2), and which, in a second functional position, is aligned in a plane essentially parallel to the base (21), thereby exposing the opening of the container (2), wherein the at least one lid section (212) is dimensioned such that, in the first functional position of all lid sections (212), the opening of the container (2) is covered to at least 50%, and wherein the at least one lid section (212) has a cutout (2121) for the flat body (211) arranged on the associated side wall (22, 23, 24, 25), wherein the cutout (2121) allows independent pivotability of the flat body (211) and the lid section (212).

7. Device according to claim 6, **characterized in that** a predetermined breaking area is located in a connecting area between the at least one lid section (212) and the associated side wall (22, 23, 24, 25), and **in that** the lid section (212) is removable from the side wall (22, 23, 24, 25) along the predetermined breaking area.

8. Device according to any one of claims 1 to 4, **characterized in that** at least one flat body (211) is dimensioned in such a way that, in the first functional position of all flat bodies (211), the opening of the container (2) is covered to at least 50%.

9. Device according to any one of claims 1 to 8, **characterized in that** all flat bodies (211) and all optionally provided lid sections (212) are in their first functional position, whereby the opening of the container (2) is closed at least to 50%, particularly preferably substantially completely, by a film attached to at least two side walls (22, 23, 24, 25).

10. Use
- of a device (1) comprising a container (2) with a polygonal, preferably quadrangular base (21) and with side walls (22, 23, 24, 25) which are connected to the base (21) along the respective base edges (26, 27, 28, 29), wherein a first flat body (211) is arranged on a first side wall (22), which first flat body (211) is pivotable relative to the first side wall (22) and, in a first functional position, is aligned essentially parallel to the base (21), thereby at least partially covering an opening of the container (2), and which first flat body (211), in a second functional position, is aligned essentially in a plane parallel to the base (21), thereby exposing the opening of the container (2), wherein, on a first side of the first flat body (211), which, in the first functional position, faces the base (21) of the container (2), there is provided a fixing region (2111) formed by a fixing means, in particular by suction cups or by an adhesive material, by means of which fixing region (2111) the device (1) can be fastened to a vehicle pane (4) in the second functional position of the first flat body (211), and wherein the device (1) consists predominantly of cardboard, or
- of a device (1) according to any one of claims 1 to 9 for protecting a sensor holder (3) prior to assembly to a vehicle pane (4) and/or for protecting a sensor holder (3) that is fixed to a vehicle pane (4).

11. Method for protecting a sensor holder (3), comprising
a) providing a device (1) comprising a container (2) with a polygonal, preferably quadrangular base (21) and with side walls (22, 23, 24, 25) which are connected to the base (21) along the respective base edges (26, 27, 28, 29), wherein a first flat body (211) is arranged on a first side wall (22), which first flat body (211) is pivotable relative to the first side wall (22), and, in a first functional position, is aligned essentially parallel to the base (21), thereby at least partially covering an opening of the container (2), and which first flat body (211), in a second functional position, is aligned essentially in a plane parallel to the base (21), thereby exposing the opening of the container (2), wherein, on a first side of the first flat body (211), which, in the first functional position, faces the base (21) of the container (2), there is provided a fixing region (2111) formed by a fixing means, in particular by suction cups or by an adhesive material, by means of which fixing region (2111) the device (1) can be fastened to a vehicle pane (4) in the second functional position of the first flat body (211), and wherein the device (1) consists predominantly of cardboard, or
providing a device (1) according to any one of claims 1 to 9,
b) arranging a sensor holder (3) in the container (2) of the device (1),
c) at least partially covering the opening of the container (2) by a separate insert and/or by one or more flat bodies (211), which are in their first functional position, and/or by one or more lid sections (212), which are in their first functional positions, and/or by a film which is attached to at least two side walls (22, 23, 24, 25).

12. Method according to claim 11, additionally comprising
d) removing the sensor holder (3) from the container (2) of the device (1),
e) fixing the sensor holder (3) to a vehicle pane (4),
f) arranging the device (1) on the vehicle pane (4) in such a way that the base (21) of the container (2) covers a side of the sensor holder (3) facing away from the vehicle pane (4), all the flat bodies (211) being in their second functional positions and at least one flat body (211) being fastened to the pane (4) via its fixing region (2111), in particular wherein the device (1) is additionally detachably fastened to the vehicle pane (4) by receiving at least part of an edge of the vehicle pane (41) in receiving slots (2131) of the flaps (213) arranged on a side wall (22, 23, 24, 25).

13. Method according to claim 12, additionally comprising removing at least one lid section (212) before or after arranging the device (1) on the vehicle pane (4).

14. Arrangement comprising a device (1) comprising a container (2) with a polygonal, preferably quadrangular base (21) and with side walls (22, 23, 24, 25) which are connected to the base (21) along the respective base edges (26, 27, 28, 29), wherein first flat body (211) is arranged on a first side wall (22), which first flat body (211) is pivotable relative to the first side wall (22) and, in a first functional position, is aligned essentially parallel to the base (21), thereby at least partially covering an opening of the container (2), and which first flat body (211), in a second functional position, is aligned essentially in a plane parallel to the base (21), thereby exposing the opening of the container (2), wherein, on a first side of the first flat body (211), which, in the first functional position, faces the base (21) of the container (2), there is provided a fixing region (2111) formed by a fixing means, in particular by suction cups or by an adhesive material, by means of which fixing region (2111) the device (1) can be fastened to a vehicle pane (4) in the second functional position of the first flat body (211), and wherein the device (1) consists predominantly of cardboard or comprising a device (1) according to any one of claims 1 to 9 and comprising a sensor holder (3).

15. Arrangement according to claim 14, additionally comprising a vehicle pane (4).

## Revendications

1. Dispositif (1) de protection d'un support de capteur (3) pendant le transport, comportant un contenant (2) doté d'un fond (21) polygonal, de préférence quadrangulaire, et de parois latérales (22, 23, 24, 25) qui sont raccordées au fond (21) le long des bords de fond (26, 27, 28, 29) respectifs, un premier corps plat (211) pouvant pivoter relativement à une première paroi latérale (22) étant disposé sur la première paroi latérale (22), lequel corps plat, dans une première position fonctionnelle, est orienté sensiblement parallèlement au fond (21) et recouvre en l'occurrence au moins partiellement une ouverture du contenant (2), et lequel corps plat, dans une deuxième position fonctionnelle, est orienté sensiblement dans un plan parallèle au fond (21) et libère en l'occurrence l'ouverture du contenant (2), une région de fixation (2111) qui est formée par un moyen de fixation, en particulier par des ventouses ou par une matière adhésive, étant prévue sur un premier côté du premier corps plat (211), lequel premier côté est tourné vers le fond (21) du contenant (2) dans la première position fonctionnelle, région de fixation au moyen de laquelle le dispositif (1) peut être fixé à une vitre de véhicule (4) dans la deuxième position fonctionnelle du premier corps plat (211), et le dispositif (1) étant constitué principalement de carton, **caractérisé en ce qu'**exclusivement un premier corps plat (211) est présent.

2. Dispositif (1) de protection d'un support de capteur (3) pendant le transport, comportant un contenant (2) doté d'un fond (21) polygonal, de préférence quadrangulaire, et de parois latérales (22, 23, 24, 25) qui sont raccordées au fond (21) le long des bords de fond (26, 27, 28, 29) respectifs, un premier corps plat (211) pouvant pivoter relativement à une première paroi latérale (22) étant disposé sur la première paroi latérale (22), lequel corps plat, dans une première position fonctionnelle, est orienté sensiblement parallèlement au fond (21) et recouvre en l'occurrence au moins partiellement une ouverture du contenant (2), et lequel corps plat, dans une deuxième position fonctionnelle, est orienté sensiblement dans un plan parallèle au fond (21) et libère en l'occurrence l'ouverture du contenant (2), une région de fixation (2111) qui est formée par un moyen de fixation, en particulier par des ventouses ou par une matière adhésive, étant prévue sur un premier côté du premier corps plat (211), lequel premier côté est tourné vers le fond (21) du contenant (2) dans la première position fonctionnelle, région de fixation au moyen de laquelle le dispositif (1) peut être fixé à une vitre de véhicule (4) dans la deuxième position fonctionnelle du premier corps plat (211), et le dispositif (1) étant constitué principalement de carton, **caractérisé en ce qu'**exclusivement un premier corps plat (211) et un deuxième corps plat (211) sont prévus, le deuxième corps plat (211) étant disposé sur une deuxième paroi latérale (23) qui est de préférence en regard de la première paroi latérale (22), et pouvant pivoter relativement à la deuxième paroi latérale (23), le deuxième corps plat (211), dans une première position fonctionnelle, étant orienté sensiblement parallèlement au fond (21) et recouvrant en l'occurrence au moins partiellement l'ouverture du contenant (2) et, dans une deuxième position fonctionnelle, étant orienté sensiblement dans un plan parallèle au fond (21) et libérant en l'occurrence l'ouverture du contenant (2), une région de fixation (2111) qui est formée par un moyen de fixation, en particulier par des ventouses ou par une matière adhésive, étant prévue sur un premier côté du deuxième corps plat (211), lequel deuxième côté est tourné vers le fond (21) du contenant (2) dans la première position fonctionnelle, région de fixation au moyen de laquelle le dispositif peut être fixé à la vitre de véhicule (4) dans la deuxième position fonctionnelle du deuxième corps plat (211).

3. Dispositif selon la revendication 1, **caractérisé en ce qu'**une deuxième paroi latérale (23), laquelle est de préférence en regard de la première paroi latérale (22), comporte deux pattes (213) disposées latéralement sur cette paroi latérale (23) et dotées respectivement d'une fente de réception (2131), les fentes de réception (2131) étant conçues pour recevoir au moins partiellement une région de bord de la vitre de véhicule (41).

4. Dispositif selon la revendication 2, **caractérisé en ce qu'**une troisième paroi latérale (24) comporte deux pattes (213) disposées latéralement sur cette paroi latérale (24) et dotées respectivement d'une fente de réception (2131), les fentes de réception (2131) étant conçues pour recevoir au moins partiellement une région de bord de la vitre de véhicule (41).

5. Dispositif selon l'une des revendications 1 à 4, **caractérisé en ce que** le dispositif (1) comporte un insert séparé, lequel est conçu comme couvercle du contenant (2) et est dimensionné de telle sorte que le fond (21) du contenant (2) peut être recouvert au moins à 50% par l'insert séparé.

6. Dispositif selon l'une des revendications 1 à 4, **caractérisé en ce que** sur au moins une paroi latérale (22, 23, 24, 25) en outre au moins une partie de couvercle (212) est présente, laquelle peut pivoter relativement à la paroi latérale (22, 23, 24, 25) associée et, dans une première position fonctionnelle, est orientée sensiblement parallèlement au fond (21) et recouvre moins partiellement l'ouverture du contenant (2) et, dans une deuxième position fonctionnelle, est orientée dans un plan sensiblement parallèle au fond (21) et libère en l'occurrence l'ouverture du contenant (2), l'au moins une partie de couvercle (212) étant dimensionnée de telle sorte que dans la première position fonctionnelle de toutes les parties de couvercle (212) l'ouverture du contenant (2) est recouverte à au moins 50%, et une découpe (2121) pour le corps plat (211) disposé sur la paroi latérale (22, 23, 24, 25) associée étant prévue dans l'au moins une partie de couvercle (212), la découpe (2121) permettant une capacité de pivotement indépendante du corps plat (211) et de la partie de couvercle (212).

7. Dispositif selon la revendication 6, **caractérisé en ce qu'**une région destinée à la rupture se trouve dans une région de raccordement entre l'au moins une partie de couvercle (212) et la paroi latérale (22, 23, 24, 25) associée et **en ce que** la partie de couvercle (212) peut être enlevée de la paroi latérale (22, 23, 24, 25) le long de la région destinée à la rupture.

8. Dispositif selon l'une des revendications 1 à 4, **caractérisé en ce qu'**au moins un corps plat (211) est dimensionné de telle sorte que dans la première position fonctionnelle de tous les corps plats (211), l'ouverture du contenant (2) est recouverte à au moins 50%.

9. Dispositif selon l'une des revendications 1 à 8, **caractérisé en ce que** tous les corps plats (211) et toutes les parties de couvercle (212) éventuellement présentes se trouvent dans leur première position fonctionnelle, l'ouverture du contenant (2) étant fermée à au moins 50 %, de manière particulièrement préférée sensiblement complètement, par un film fixé à au moins deux parois latérales (22, 23, 24, 25).

10. Utilisation
- d'un dispositif (1) comportant un contenant (2) doté d'un fond (21) polygonal, de préférence quadrangulaire, et de parois latérales (22, 23, 24, 25) qui sont raccordées au fond (21) le long des bords de fond (26, 27, 28, 29) respectifs, un premier corps plat (211) pouvant pivoter relativement à une première paroi latérale (22) étant disposé sur la première paroi latérale (22), lequel corps plat, dans une première position fonctionnelle, est orienté sensiblement parallèlement au fond (21) et recouvre en l'occurrence au moins partiellement une ouverture du contenant (2), et lequel corps plat, dans une deuxième position fonctionnelle, est orienté sensiblement dans un plan parallèle au fond (21) et libère en l'occurrence l'ouverture du contenant (2), une région de fixation (2111) qui est formée par un moyen de fixation, en particulier par des ventouses ou par une matière adhésive, étant prévue sur un premier côté du premier corps plat (211), lequel premier côté est tourné vers le fond (21) du contenant (2) dans la première position fonctionnelle, région de fixation au moyen de laquelle le dispositif (1) peut être fixé à une vitre de véhicule (4) dans la deuxième position fonctionnelle du premier corps plat (211), et le dispositif (1) étant constitué principalement de carton, ou
- d'un dispositif (1) selon l'une des revendications 1 à 9
pour la protection d'un support de capteur (3) avant un montage sur une vitre de véhicule (4) et/ou pour la protection d'un support de capteur (3) fixé à une vitre de véhicule (4).

11. Procédé pour protéger un support de capteur (3), comportant
a) la fourniture d'un dispositif (1) comportant un contenant (2) doté d'un fond (21) polygonal, de préférence quadrangulaire, et de parois latérales (22, 23, 24, 25) qui sont raccordées au fond (21) le long des bords de fond (26, 27, 28, 29) respectifs, un premier corps plat (211) pouvant pivoter relativement à une première paroi latérale (22) étant disposé sur la première paroi latérale (22), lequel corps plat, dans une première position fonctionnelle, est orienté sensiblement parallèlement au fond (21) et recouvre en l'occurrence au moins partiellement une ouverture du contenant (2), et lequel corps plat, dans une deuxième position fonctionnelle, est orienté sensiblement dans un plan parallèle au fond (21) et libère en l'occurrence l'ouverture du contenant (2), une région de fixation (2111) qui est formée par un moyen de fixation, en particulier par des ventouses ou par une matière adhésive, étant prévue sur un premier côté du premier corps plat (211), lequel premier côté est tourné vers le fond (21) du contenant (2) dans la première position fonctionnelle, région de fixation au moyen de laquelle le dispositif (1) peut être fixé à une vitre de véhicule (4) dans la deuxième position fonctionnelle du premier corps plat (211), et le dispositif (1) étant constitué principalement de carton, ou d'un dispositif (1) selon l'une des revendications 1 à 9,
b) la disposition d'un support de capteur (3) dans le contenant (2) du dispositif (1),
c) le recouvrement au moins partiel de l'ouverture du contenant (2) par un insert séparé et/ou par un ou plusieurs corps plats (211), lesquels se trouvent dans leur première position fonctionnelle, et/ou par une ou plusieurs parties de couvercle (212), lesquelles se trouvent dans leur première position fonctionnelle, et/ou par un film, lequel est fixé à au moins deux parois latérales (22, 23, 24, 25).

12. Procédé selon la revendication 11, comportant en outre
d) l'enlèvement du support de capteur (3) du contenant (2) du dispositif (1),
e) la fixation du support de capteur (3) à une vitre de véhicule (4),
f) la disposition du dispositif (1) sur la vitre de véhicule (4) de telle sorte que le fond (21) du contenant (2) recouvre un côté, opposé à la vitre de véhicule (4), du support de capteur (3), tous les corps plats (211) se trouvant dans leur deuxième position fonctionnelle et au moins un corps plat (211) étant raccordé à la vitre (4) par le biais de sa région de fixation (2111), le dispositif (1) étant en particulier fixé de manière amovible en outre à la vitre de véhicule (4) par réception d'au moins une partie d'un bord de la vitre de véhicule (41) dans des fentes de réception (2131) des pattes (213) disposées sur une paroi latérale (22, 23, 24, 25).

13. Procédé selon la revendication 12, comportant en outre l'enlèvement d'au moins une partie de couvercle (212) avant ou après la disposition du dispositif (1) sur la vitre de véhicule (4).

14. Système comportant un dispositif (1) comportant un contenant (2) doté d'un fond (21) polygonal, de préférence quadrangulaire, et de parois latérales (22, 23, 24, 25) qui sont raccordées au fond (21) le long des bords de fond (26, 27, 28, 29) respectifs, un premier corps plat (211) pouvant pivoter relativement à une première paroi latérale (22) étant disposé sur la première paroi latérale (22), lequel corps plat, dans une première position fonctionnelle, est orienté sensiblement parallèlement au fond (21) et recouvre en l'occurrence au moins partiellement une ouverture du contenant (2), et lequel corps plat, dans une deuxième position fonctionnelle, est orienté sensiblement dans un plan parallèle au fond (21) et libère en l'occurrence l'ouverture du contenant (2), une région de fixation (2111) qui est formée par un moyen de fixation, en particulier par des ventouses ou par une matière adhésive, étant prévue sur un premier côté du premier corps plat (211), lequel premier côté est tourné vers le fond (21) du contenant (2) dans la première position fonctionnelle, région de fixation au moyen de laquelle le dispositif (1) peut être fixé à une vitre de véhicule (4) dans la deuxième position fonctionnelle du premier corps plat (211), et le dispositif (1) étant constitué principalement de carton, ou un dispositif (1) selon l'une des revendications 1 à 9 et un support de capteur (3) .

15. Système selon la revendication 14, comportant en outre une vitre de véhicule (4).
